# EUROPÄISCHE PATENTSCHRIFT

(11) **EP 2 403 188 B1**
(45) Veröffentlichungstag und Bekanntmachung des Hinweises auf die Patenterteilung: **03.09.2014**
(21) Anmeldenummer: 11005305.5
(22) Anmeldetag: 29.06.2011
(51) Int. Cl.: H04L 12/26

(54) **Verfahren und Vorrichtung zur Durchsatzmessung**
Method and device for measuring throughput
Procédé et dispositif de mesure du débit

(30) Priorität: 01.07.2010 DE 102010025730
(43) Veröffentlichungstag der Anmeldung: 04.01.2012
(73) Patentinhaber: Telefónica Germany GmbH & Co. OHG, 80992 München (DE)
(72) Erfinder: Rugel, Stefan, Dr., 80639 München (DE)
(74) Vertreter: Herrmann, Uwe

(56) Entgegenhaltungen:
- EP-A2- 1 746 788
- WO-A2-02/103630
- US-A1- 2001 021 176

## Beschreibung

Die vorliegende Erfindung betrifft ein Verfahren zur Bestimmung des Datendurchsatzes einer verbindungsorientierten Kommunikationsverbindung zwischen einem Client und wenigstens einem Server über eine bidirektionale Übertragungsstrecke in einer ersten Übertragungsrichtung, wobei zur Durchsatzbestimmung der Verbindung die Anzahl der übertragenen Nutzdaten in erster Richtung innerhalb eines definierbaren Zeitintervalls bestimmt wird, und wobei das Zeitintervall durch einen festen oder dynamischen Startzeitpunkt und einen dynamischen Endzeitpunkt festgelegt wird.

Netzanbieter haben ein erhebliches Interesse an der Möglichkeit, netzspezifische Parameter möglichst präzise während des Netzbetriebes zu erfassen. Diese Informationen sollen vor Allem bei der Instandhaltung und Optimierung der Netzinfrastruktur sowie bei zukünftigen Netzdimensionierungen Berücksichtigung finden. Eine wesentliche Rolle spielt die Messung des Datendurchsatzes, den der einzelne Kunde bei der Nutzung eines Datendienstes erreicht.

Ein direkter Zugriff auf den Client oder den Server einer Datenverbindung zur Durchsatzmessung ist unerwünscht bzw. in der Regel unmöglich. Die Messung des Datendurchsatzes muß folglich aus dem Netz heraus erfolgen, indem die zwischen den Endpunkten übertragenen Nachrichten erfaßt und ausgewertet werden.

Zur Messung des Datendurchsatzes, den ein Kunde bei der Inanspruchnahme eines Datendienstes erfährt, muss also vorweg die Frage geklärt werden, welche Art von Daten und über welchen Zeitraum diese Daten für die Durchsatzmessung berücksichtigt werden sollen. Die Genauigkeit der Messung und folglich die Aussagekraft des Meßergebnisses hängt also von der Art der gewählten Daten bzw. des definierten Zeitraumes ab.

Eine erste Möglichkeit besteht darin, den Start- und Endzeitpunkt für ein Messintervall fest zu definieren. Alle erfaßten Daten, die innerhalb dieses Messintervalls übertragen werden, werden durch das Verfahren gezählt und zur Bestimmung des Datendurchsatzes verwendet. Der Durchsatz ergibt sich aus dem Datenvolumen über den festgelegten Zeitraum.

Die Präzision des vorgenannten Messverfahrens hängt stark von der Art der Datenübertragung ab. Beispielsweise erzielt dieses Messverfahren für eine Streaming-Verbindung ein hinreichend genaues Ergebnis für den Datendurchsatz, da die zu zählenden Daten kontinuierlich und unterbrechungslos vom Sender zum Empfänger, d. h. vom Server zum Client, übertragen werden.

Ein Nachteil des vorgeschlagenen Messverfahrens taucht bei der Anwendung auf den sogenannten Burst Traffic auf. Einzelne Datenpakete werden stoßartig im angegebenen Messzeitraum übertragen. Zwischen den einzelnen Datenstößen ergeben sich Ruhezeiten, in denen keine Daten auf der Übertragungsstrecke übertragen werden und unter Umständen eine Inaktivität des Senders und des Empfängers im angegebenen Zeitraum bedeuten. Diese Ruhezeiten können möglicherweise das Meßergebnis in erheblichem Maße verfälschen.

Die Ruhepausen zwischen einzelnen Burst-Übertragungen lassen sich in zwei unterschiedliche Kategorien einteilen. Die Kommunikation zwischen Sender und Empfänger erfolgt über ein verbindungsorientiertes Kommunikationsprotokoll. Nach dem Aufbau der Verbindung werden Datenpakete vom Sender zum Empfänger übertragen bis alle im Sendepuffer abgelegten Daten übertragen worden sind. Die Verbindung zwischen dem Sender und dem Empfänger bleibt allerdings unabhängig vom Füllstand des Sendepuffers bestehen. Hieraus resultiert eine Ruhepause des Senders, die bis zur Neubefüllung des Sendepuffers anhält. Diese Art von Ruhepausen wird im Folgenden mit dem Begriff der "guten Ruhepausen" bezeichnet. Diese Ruhepausen sind beabsichtigt, da zum Beispiel keine nutzerseitige Datenanforderung gestellt wurde.

Demgegenüber stehen "schlechte Ruhepausen", die durch diverse Ereignisse oder Einflüsse auf den Übertragungsweg und durch Verzögerungen in der Übertragungstrecke ausgelöst werden. Beispiele für derartige Übertragungsprobleme sind die netzseitige Zwischenspeicherung von Datenpaketen, die zu Verzögerungen im Übertragungsweg führt, die wiederholte Übertragung von einzelnen Datenpaketen, duplizierte Quittierungsnachrichten, sowie falsche bzw. suboptimale Parametereinstellung des benutzten Übertragungsprotokolls. Die "schlechten Ruhezeiten" beeinträchtigen unmittelbar die Übertragungsqualität bzw. den erzielbaren Datendurchsatz zwischen Server und Client. Häuft sich die Anzahl der wiederholt zu übertragenden Datenpakete, reduziert dies den tatsächlichen Durchsatz der Datenverbindung maßgeblich. Diese Ruhezeiten müssen daher unbedingt bei der Durchsatzmessung berücksichtigt werden, um hinreichend präzise Meßergebnisse zu erzielen.

Das vorgenannte Messverfahren sieht Maßnahmen vor, um alle auftretenden Ruhezeiten, die bei der Übertragung der Datenpakete auftreten, zu verwerfen. Eine Unterscheidung zwischen guten und schlechten Ruhezeiten erfolgt demnach nicht. Die Genauigkeit der Messergebnisse ist folglich für derartige Datenverbindungen ausreichend, bei denen keine oder überwiegend gute Ruhezeiten auftreten. Bei Datenverbindungen mit schlechten Ruhezeiten wird das Meßergebnis durch die Nichtberücksichtigung der schlechten Ruhezeiten stark verfälscht. In diesen Fällen liegt der gemessene Datendurchsatz über dem tatsächlich vorliegenden Datendurchsatz, das Ergebnis wird also beschönigt und spiegelt nicht die tatsächliche Benutzererfahrung wieder.

Die EP 1 746 788 A2 offenbart ein Verfahren zur Ermittlung der Burst Bit Rate zwischen einem Server und einem Client während eines definierten Zeitintervalls. Der Startzeitpunkt des Berechnungszeitintervalls wird auf den Zeitpunkt des Eintreffens des ersten Datenpaketes im Gateway GPRS Support Note festgelegt. Das Eintreffen des letzten Datenpaketes im genannten Knoten definiert den Endzeitpunkt des Berechnungsintervalls.

Ein Verfahren zur statistischen Analyse einer Verbindung zwischen einem ersten und zweiten Terminal ist aus der US 2001/0021176 A1 bekannt. Einzelne Netzwerkelemente erfassen dabei die Anzahl der zu einer Verbindung zwischen den Terminals gehörigen Pakete und teilen diese einer zentralen Auswertestation mit. Der Messzeitraum wird dabei durch das Eintreffen des ersten Paketes gestartet und das Erkennen einer bestimmten Ruhezeit beendet.

Ein weiteres Verfahren zur Berechnung der Datenrate ist aus der WO 02/103630 A2 bekannt. Diese Druckschrift schlägt vor, dass lediglich die Anzahl an übertragenen Bits während der Übertragung eines zusammengehörigen Nachrichtenpaars erfasst und für die Berechnung der Datenrate berücksichtigt werden.

Vor diesem Hintergrund ist es Aufgabe der vorliegenden Erfindung, ein Verfahren aufzuzeigen, dass ein verbessertes Verfahren zur Messung des Datendurchsatzes einer Kommunikationsverbindung erlaubt.

Diese Aufgabe wird durch ein Verfahren gemäß der Merkmalskombination des Anspruchs 1 gelöst. Weitere vorteilhafte Weiterbildungen der Erfindung sind Gegenstand der abhängigen Unteransprüche.

Gemäß dem Anspruch 1 wird ein Verfahren zur Bestimmung des Datendurchsatzes einer verbindungsorientierten Verbindung zwischen einem Client und wenigstens einem Server auf einer bidirektionalen Übertragungsstrecke in einer ersten Übertragungsrichtung vorgeschlagen, wobei zur Durchsatzbestimmung die Anzahl der übertragenen Nutzdaten in erster Richtung innerhalb eines definierbaren Zeitintervalls bestimmt werden, und wobei das Zeitintervall durch einen festen oder dynamischen Startzeitpunkt und einen dynamischen Endzeitpunkt festgelegt wird. Das Verfahren arbeitet unabhängig von der zu messenden Übertragungsrichtung.

Im Folgenden wird hauptsächlich von der Messung des Datendurchsatzes in einer ersten Übertragungsrichtung gesprochen, die beispielsweise den Download vom wenigstens einem Server zum Client charakterisiert. Eine Anwendung des Messverfahrens in Upload-Richtung erfolgt analog.

Ferner wird das erfindungsgemäße Verfahren auf ein verbindungsorientiertes Übertragungsprotokoll angewandt. Bevor eine Übertragung zwischen dem Client und dem Server erfolgen kann, muss zuerst eine Verbindung zwischen den beiden Teilnehmern initialisiert werden. Die Erfindung ist vorzugsweise nicht auf eine bestimmtte Anzahl von möglichen Verbindungen zwischen dem Client und dem Server bzw. zwischen dem Client und einer unbestimmten Anzahl an Servern beschränkt.

Wie eingangs ausführlich beschrieben wurde, soll das erfindungsgemäße Verfahren eine hinreichend präzise Aussage über den tatsächlich vorliegenden Datendurchsatz in einer ersten Übertragungsrichtung zulassen. Erfindungsgemäß wird der Endzeitpunkt des Messintervalls dynamisch festgelegt, indem der Endzeitpunkt durch die Nutzdatenübertragung in der zweiten Übertragungsrichtung, also in entgegengesetzter Übertragungsrichtung, bestimmt wird. Die Nutzdatenübertragung in zweiter Richtung ist vorzugsweise der aufgebauten Verbindung zuzuordnen. Sobald Nutzdaten in zweiter Richtung übertragen werden, kann davon ausgegangen werden, dass die vorhergegangene Anfrage des Clients abgearbeitet wurde und sämtliche Datenpakete zum Client übertragen wurden. Auf diese Weise kann zwischen "guten Ruhezeiten" und "schlechten Ruhezeiten" unterschieden werden. Eine "gute Ruhezeit" würde nach der Übertragung der Nutzdaten aufweisenden Nachricht in zweiter Richtung anlaufen. Die Ruhezeit wird folglich nicht berücksichtigt, sondern verworfen. Demgegenüber werden "schlechte Ruhezeiten" durch das erfindungsgemäße Verfahren berücksichtigt, da beispielsweise die wiederholte Übertragung von Nutzdaten in erster Richtung vor einer Nachricht mit Nutzdaten in zweiter Richtung erfolgt.

Das verwendete Übertragungsverfahren kann vorzugsweise verbindungsorientiert oder paketorientiert sein. Beispielsweise erfolgt die verbindungsorientierte Übertragung mittels des bekannten Transport control protocol (TCP). Ein Beispiel für eine paketorientierte Übertragung ist die Verwendungen des verbindungslosen "user datagram protocols" (UDP). Ferner ist es denkbar, dass Nutzdaten unterschiedlicher Übertragungsprotokolle gezählt werden. Vorzugsweise werden alle Nutzdaten innerhalb des Zeitintervalls berücksichtigt, die einer oder mehreren Verbindung zugeordnet werden können.

Wird der Startzeitpunkt für das Messintervall dynamisch festgelegt, so hat es sich als vorteilhaft erwiesen, wenn der Startzeitpunkt durch die Übermittlung erster Nutzdaten in erster Richtung festgelegt wird. Demnach werden sämtliche Nutzdaten in erster Übertragungsrichtung berücksichtigt, die nach dem Auftritt von ersten Nutzdaten in erster Richtung bis zum ersten Auftritt von Nutzdaten in entgegengesetzter Richtung gezählt werden. Die ersten Nutzdaten in entgegengesetzter Richtung sind vorzugsweise der aufgebauten Verbindung zuzuordnen.

Anstatt den Startzeitpunkt auf den Zeitpunkt der ersten Übertragung von Nutzdaten in erster Richtung festzulegen, wird vorteilhafterweise der Startzeitpunkt durch den Übertragungszeitpunkt der entsprechenden Quittierungsnachricht der ersten Nutzdaten definiert. Demnach übermittelt der Sender eine erste Nachricht mit Nutzdaten an den Empfänger. Dieser sendet bevorzugt eine Quittierungsnachricht an den Sender, die Informationen über den erfolgreichen Empfang der empfangenen Nutzdaten enthält. Der Startzeitpunkt für die Messung des Datendurchsatzes wird demnach vorzugsweise durch den Zeitpunkt der Aussendung dieser Quittierungsnachricht bestimmt.

Alternativ kann der Startzeitpunkt in Abhängigkeit einer beliebigen Anzahl N übermittelter Quittierungsnachrichten bestimmt werden, so dass die Anfangsphase einer Verbindung abgewartet wird und die Messung des Datendurchsatzes erst nach einer durch N spezifizierten Anlaufverzögerung erfolgt. Am Beispiel einer TCP Verbindung kann durch geeignete Wahl des Parameters N erreicht werden, dass die Messung des Datendurchsatzes erst nach Abschluß der den Datensatz begrenzenden Anfangsphase, dem sogenannten "slow start" beginnt. Hierzu wird N vorzugsweise deutlich größer als drei, zum Beispiel zu 30 gewählt.

Vorzugsweise beinhaltet die Quittierungsnachricht Informationen über die bereits empfangene Nutzdatenmenge. Aus diesem Grund besteht die Möglichkeit, die Anzahl der übertragenen Nutzdaten nicht an den übertragenen Nachrichten mit Nutzdaten in erster Richtung festzumachen, sondern alternativ die Informationen innerhalb der entsprechenden Quittierungsnachrichten zur Zählung der Nutzdaten zu verwenden. Dadurch wird sichergestellt, dass nur diese Nutzdaten für die Durchsatzmessung berücksichtigt werden, die erfolgreich auf Empfängerseite empfangen worden sind und durch eine entsprechende Quittierungsnachricht quittiert worden sind. Demgegenüber würde eine direkte Berücksichtigung der übertragenen Nutzdaten in erster Richtung dazu führen, dass auch diejenigen Nutzdaten berücksichtigt werden, die zwar durch das Verfahren erkannt werden, jedoch auf Empfängerseite nicht korrekt oder gar nicht empfangen werden.

Vorzugsweise werden sämtliche Nutzdaten der aufgebauten Verbindung berücksichtigt, die innerhalb des gewählten Zeitintervalls übertragen werden. Ferner ist es möglich, alle weiteren Nutzdaten innerhalb des Zeitintervalls zu berücksichtigen, die nicht der aufgebauten Verbindung des verbindungsorientierten Übertragungsprotokolls zuzuordnen sind. Beispielsweise wird eine Verbindung zwischen Sender und Empfänger mit Hilfe des TCP-Protokolls aufgebaut. Zur Messung des Datendurchsatzes werden alle dieser TCP-Verbindung zuzuordnen Nutzdaten gezählt. Ferner werden weitere Nutzdaten, die beispielsweise einer UDP-Protokoll-Verbindung zuzuordnen sind, ebenfalls berücksichtigt.

Erfindungsgemäß wird der Endzeitpunkt des Zeitintervalls durch die Übertragung von Nutzdaten in der zweiten Übertragungsrichtung festgelegt. Ferner sind weitere auftretende Ereignisse möglich, die einen davon abweichenden Endzeitpunkt festlegen können. Hierzu zählt die Übertragung bestimmter Signalisierungsnachrichten, die während der initialisierten Verbindung zwischen Server und Client übertragen werden. Insbesondere sind Signalisierungsnachrichten zu berücksichtigen, die einen Abbruch der Verbindung aus beliebigen Gründen signalisieren. Vorzugsweise sind Signalisierungsnachrichten denkbar, die eine ordnungsgemäße Beendigung der Verbindung zwischen Server und Client anzeigen. Ein Abbruch der Verbindung kann beispielsweise aufgrund der mangelnden Übertragungsqualität vollzogen werden. Die ordnungsgemäße Beendigung wird demgegenüber nach der erfolgreichen Übertragung sämtlicher Datenpakete signalisiert. Zweckmäßig finden Signalisierungsnachrichten in erster und/oder zweiter Richtung Berücksichtigung.

Ebenfalls kann der Endzeitpunkt des Zeitintervalls durch den Ablauf eines bestimmten Timeout Ereignisses des Kommunikationsprotokolls bestimmt werden. Das Timeout Ereignis kann auf Client- und/oder Serverseite erfolgen und zwar dann, wenn für eine bestimmte Zeit kein Datenpaket aufgezeichnet wird, das eine Beendigung der Verbindung signalisiert.

Ferner kann eine Beendigung der Verbindung zwischen Server und Client auf einer anderen Schichtebene den Endzeitpunkt festlegen. Die Verbindung zwischen Client und Server erfolgt vorzugsweise in Anlehnung an das OSI-Referenzmodell. Das zu betrachtende Kommunikationsprotokoll ist auf einer beliebigen Schichtebene, insbesondere der Transportebene des Referenzmodells angesiedelt. Ein Abbruch der Kommunikation auf einer darunterliegenden Schicht, wie der Vermittlungs- und/oder Physikalischen-Schicht führt demnach zum Abbruch der Verbindung zwischen Client und Server. Der Endzeitpunkt des Zeitintervalls wird durch den Zeitpunkt der Beendigung der Verbindung zwischen Client und Server definiert.

Vorzugsweise wird der tatsächliche Endzeitpunkt des Zeitintervalls nicht durch den Zeitpunkt des den Endzeitpunkt festlegenden Ereignisses bestimmt, sondern statt dessen durch den Zeitpunkt der letzten Quittierungsnachricht vor diesem Ereignis. Wird beispielsweise die Übertragung von Nutzdaten in zweiter Richtung erkannt, ergibt sich der Endzeitpunkt des Zeitintervalls durch den Zeitpunkt der vorherigen Quittierungsnachricht in zweiter Richtung.

Die vorliegende Erfindung betrifft des Weiteren eine Vorrichtung zur Durchführung des Verfahrens gemäß einer der voranstehenden Merkmalskombinationen. Die Vorrichtung steht mit einem Kommunikationsnetz in Verbindung oder ist mit diesem verbindbar ausgeführt, um den Nachrichtenaustausch zwischen Client und wenigstens einem Server aufzuzeichnen und auszuwerten. Die Aufzeichnung und Auswertung kann vorzugsweise durch unterschiedliche Vorrichtungsmodule erfolgen. Ferner kann die Aufzeichnung und Auswertung parallel oder nacheinander erfolgen. Die Aufzeichnung erfolgt durch das Aufzeichnungsmodul der Vorrichtung. Die Auswertung erfolgt zeitlich versetzt durch Bereitstellung der Aufzeichnungsdaten des Aufzeichnungsmoduls an das Auswertemodul der Vorrichtung. Die Auswertung bzw. die Messung des Datendurchsatzes muss demnach nicht zwingend im Realzeitbetrieb erfolgen.

Denkbar ist es, dass die Bestimmung des Datendurchsatzes im Realzeitbetrieb des Kommunikationsnetzes erfolgt.

Die Vorrichtung bzw. die einzelnen Module können rechnergestützten Architekturen umfassen, auf der ein Befehlsatz zur Durchführung des erfindungsgemäßen Verfahrens abläuft.

Weiterhin ist die vorliegende Erfindung auf ein Kommunikationssystem, insbesondere ein Telekommunikationssystem, mit wenigstens einem Server und wenigstens einem Client, insbesondere einem mobilen Endgerät, gerichtet, wobei das Kommunikationssystem eine Vorrichtung gemäß einem der voranstehenden Merkmale aufweist. Das erfindungsgemäße Kommunikationssystem erlaubt die Erstellung einer netzweiten Übersicht, die den tatsächlichen Datendurchsatz in einzelnen Netzsegmenten wiedergibt. Die weitere Netzplanung, Netzdimensionierung und Optimierung kann in Zukunft unter Berücksichtigung der erfaßten Meßwerte erfolgen. Der mögliche, d.h. der erzielbare Datendurchsatz unter Realzeitbedingungen ist ein wesentliches Merkmal eines Kommunikationsnetzes, der eine maßgebliche Aussage über die Netzqualität zuläßt und folglich Rückschlüsse auf die Kundenzufriedenheit der Netzteilnehmer gewährt.

Weiterhin betrifft die vorliegende Erfindung einen auf einem computerlesbaren Medium gespeicherten Programmcode Ausführung auf einer Vorrichtung gemäß den voranstehenden Merkmalen. Die Ausführung des Programmcodes bewirkt die Durchführung des Verfahrens gemäß einem der voranstehenden Merkmale.

Weitere Vorteile und Einzelheiten der Erfindung werden im Folgenden anhand von Zeichnungen näher erläutert. Es zeigen:
- Figur 1:: Ablaufdiagramm einer TCP-Verbindung
- Figur 2:: Zustandsdiagramm einer TCP-Verbindung

Gegenstand des erfindungsgemäßen Verfahrens ist die Messung des Datendurchsatzes, den der Netzteilnehmer eines Kommunikationsnetzes erfährt. Konkret wird dabei der Durchsatz zum Endgerät des Netzteilnehmers betrachtet. Das Endgerät kann beispielsweise ein mobiles Endgerät sein, das einen spezifischen Datendienst des Netzanbieters in Anspruch nimmt.

Das nachfolgende Ausführungsbeispiel beschäftigt sich im Detail mit der Messung des Datendurchsatzes der Verbindung zwischen Server und Client in Clientrichtung, wobei das Teilnehmerendgerät den Client der Verbindung darstellt. Diese Übertragungsrichtung wird im Folgenden als Download bezeichnet.

Für den Client, also den Endteilnehmer besteht die Möglichkeit, eine Sitzung zu einem beliebigen Ziel, d.h. Server zu eröffnen. Im Falle eines IP basierten Kommunikationsnetzes wird das Ziel durch die Angabe einer IP Adresse repräsentiert. Während einer Sitzung kann der Client mehrere Verbindungen zu verschiedenen Zielen halten. Als Beispiel sei die Verbindung des Endgerätes mit dem Kommunikationsnetz genannt, die zum Abruf einer beliebigen Website aus dem Internet erfolgt.

Die Kommunikation innerhalb der Client-Sitzung erfolgt beispielsweise über verschiedenartige Transportprotokolle. Als Auswahlmöglichkeit bieten sich die Transportprotokolle TCP und UDP an, wobei weitere beliebige Protokolle denkbar sind. Als TCP-Verbindung wird eine Verbindung mit dem TCP-Protokoll bezeichnet, die sich durch gleiche IP-Adressen und gleiche Ports auszeichnet. Eine UDP-Verbindung ist eine Verbindung mittels UDP-Protokoll und ebenfalls gekennzeichnet durch gleiche IP-Adressen und gleiche Ports. Das Transportprotokoll wird verwendet, um die Anfrage des Endgerätes an den entsprechenden Zielserver zu übertragen. Die angeforderten Daten werden ferner über das gewählte Transportprotokoll vom Server an den Client, also an das Endgerät übermittelt.

Um eine Durchsatzmessung im Kommunikationsnetz des Netzanbieters durchzuführen, müssen durch die erfindungsgemäße Vorrichtung 100 verbindungsspezifische Datenübertragungen aufgesammelt und ausgewertet werden. Dies erfolgt durch den Start der Aufzeichnungsfunktion der Vorrichtung 100. Für jeden Client, jede Client-Sitzung und jede innerhalb dieser Sitzung stattfindende TCP- und UDP-Verbindung werden daher Daten gesammelt.

Um die gesammelten Daten auszuwerten, müssen die einzelnen Nachrichten bestimmten Kommunikationsvorgängen zugeordnet werden, um anschließend den Durchsatz einer Client-Sitzung, also den Datendurchsatz vom Server zum Client bestimmen zu können. Die folgenden Angaben geben einen kurzen beispielhaften Überblick über mögliche Kriterien zur Kategorisierung der erfaßten Nachrichten.

Eine Client-Sitzung ist durch die Client-IP-Adresse gekennzeichnet. Eine Client-Sitzung beendet sich nach Beendigung der letzten zu ihr gehörigen bestehenden TCP- oder UDP-Verbindung. Jede TCP- und UDP-Verbindung gehört zu einer Client-Sitzung und hat innerhalb dieser die gleiche Client-IP-Adresse.

Der Beginn einer TCP-Verbindung wird anhand bestimmter Signalisierungsflags innerhalb des Protokollkopfes der übertragenen Nachrichten erkannt. Wenn das erste Paket einer neuen Verbindung das Flag SYN enthält, dann ist der Anfang der Verbindung bekannt, andernfalls ist der Anfang der Verbindung unbekannt.

Das Ende der TCP-Verbindung wird durch die Übermittlung bestimmter Signalisierungsnachrichten erkannt. In diesem Fall wird ein Paket mit den Flags ACK, FIN in jeder Richtung geschickt und jedes dieser Pakete wird durch die Quittierungsnachricht ACK quittiert.

Außerdem wird nach einem Timeout die Verbindung beendet. Hier ist das Ende der Verbindung bekannt, aber das letzte Paket hat eine um den Timeout verschobene Zeit. Wenn ein Paket ein Reset-Flag enthält, wird die Verbindung ebenfalls beendet. Die Beendigung erfolgt in der Regel nicht sofort, da normalerweise diesem Paket noch einige weitere folgen, die zur selben Verbindung gehören. Die Verbindung wird endgültig beendet, wenn nach einer bestimmten Zeit kein weiteres Paket dieser Verbindung mehr gekommen ist.

Der Beginn einer UDP-Verbindung wird erkannt, falls die Verbindung nach dem Start der Aufzeichnung plus einer Timeout-Zeit beginnt. In diesem Fall ist der Anfang der Verbindung bekannt, andernfalls ist er unbekannt.

Das Ende der UDP-Verbindung wird nur nach Timeout erkannt. Bei Auftritt eines Timeouts hat das letzte Paket eine um den Timeout verschobene Zeit.

Am Ende der Aufzeichnungsperiode werden alle noch offenen Verbindungen mit "Ende unbekannt" geschlossen.

Bei Client-Sitzungen ist der Anfangszeitpunkt der Sitzung bekannt, falls der Zeitpunkt für die erste dazugehörige Verbindung bekannt ist. Entsprechendes gilt für das Ende für die letzte dazugehörige Verbindung.

Die Schwierigkeit bei der Auswertung der gesammelten Daten besteht nun darin, gezielte Downloadphasen, d.h. Zeitintervalle, innerhalb einer Verbindung, d.h. einer TCP-Verbindung, zu definieren, die für eine Berechnung des Datendurchsatzes heranzuziehen sind. Um eine hinreichend präzise Aussage treffen zu können, ist es erforderlich auftretende "schlechte Ruhezeiten" während einer TCP/UDP-Verbindung in die Berechnung einzubeziehen und die auftretenden "gute Ruhezeiten" vor der Berechnung zu verwerfen.

Der zu ermittelnde Durchsatz ist die Anzahl an Bytes pro Sekunde (bzw. kBit/s), der während der Downloadphase einer Sitzung in Downloadrichtung übertragen wird.

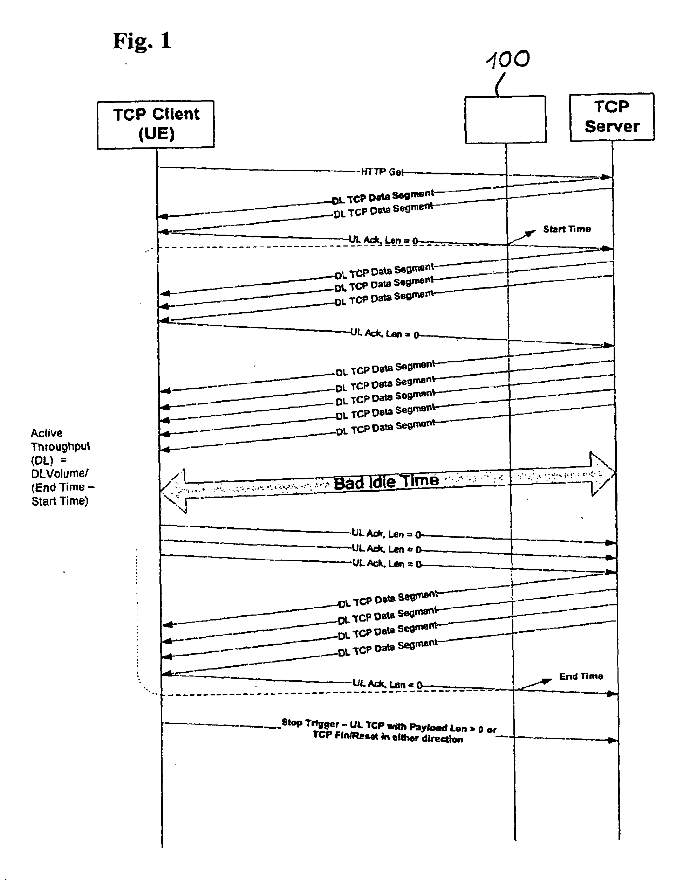

Figur 1 zeigt den Nachrichtenaustausch zwischen einem Client und einer Server. Der Client stellt eine HTTP GET Anfrage, um den Inhalt einer bestimmten Website abzurufen. Der Server antwortet mit den angeforderten Nutzdaten, die in den einzelnen Datenpaketen DL TCP Data Segment an den Client übertragen werden. Je nach Konfiguration der TCP-Protokollschicht antwortet der Empfänger mit der Übermittlung der Quittierungsnachrichten UL Ack, Len=0, um den erfolgreichen Empfang bestimmter Datensegmente zu quittieren.

Erfindungsgemäß werden für die Berechnung des Datendurchsatzes bei TCP-Verbindungen nur erfolgreich übertragene Bytes (Nutzdaten) gezählt. Um diese zu ermitteln, werden die in Uplink-Richtung übertragenen Quittierungsnachrichten betrachtet, die ein Informationsfeld mit der Anzahl der quittierten Bytes aufweisen. Der Durchsatz ergibt sich dann aus der während der Downloadphase quittierten Anzahl von Bytes.

Der Startzeitpunkt der Downloadphase (Zeitintervall gemäß Anspruch 1) wird durch die erste Quittierungsnachricht festgelegt, die den ersten erfolgreichen Empfang bestimmter Datenpakete vom Server zum Client quittiert. Im Beispiel der Figur 1 antwortet der Server auf die HTTP Anfrage mit den ersten beiden Paketen DL TCP Data Segment, die jeweils Nutzdaten aufweisen und zur Befriedung der HTTP-Anfrage beitragen. Die beiden Pakete stellen die erste Übertragung von Nutzdaten während der TCP-Verbindung dar. Das Zeitintervall zur Durchsatzmessung, d.h. die Downloadphase, beginnt mit der Übertragung der entsprechenden Quittierungsnachricht UL Ack, Len=0. Der Zusatz Len=0 kennzeichnet die Nachrichten als Quittierungsnachrichten, die selber keiner Nutzdaten enthält. Dadurch ist gewährleistet, daß nur Downloads betrachtet werden und keine interaktiven Datenströme, bei denen der TCP-Durchsatz, den man in einer Richtung mißt, auch immer von der Dynamik der darüberliegenden Protokollschichten abhängt. Zur Bestimmung des Startzeitpunktes werden nur derartige Quittierungsnachrichten berücksichtigt.

Möglich ist auch, dass der Startzeitpunkt des Zeitintervalls/Downloadphase erst nach der Übermittlung einer beliebig konfigurierbaren Anzahl an derartigen Quittierungsnachrichten ausgelöst wird.

Der Endzeitpunkt des Zeitintervalls wird dynamisch generiert und hängt vom Auftritt eines bestimmten Ereignisses ab. Im dargestellten Nachrichtendiagramm der Figur 1 wird der Endzeitpunkt durch die Übermittlung der letzten dargestellten Nachricht festgelegt, wobei der Zeitpunkt der letzten vorangehenden Quittierungsnachricht UL Ack, Len=0 als Endzeitpunkt verwendet wird. Zur Bestimmung des Endzeitpunktes werden demnach nur Quittierungsnachrichten berücksichtigt, die keinen Nutzdatenanteil aufweisen.

Das Ereignis, dass zur Bestimmung des Endzeitpunktes dient, ist erfindungsgemäß die Übertragung einer Nachricht mit Nutzdaten in Upstream-Richtung. Ferner kann das Ereignis auch durch die Übermittlung bestimmter Signalisierungsnachrichten bestimmt sein, die einen Abbruch oder die ordnungsgemäße Beendigung der TCP-Verbindung signalisieren. Hierzu ist beispielsweise in der Nachricht zum Server entweder das Reset-Flag oder das FIN-Flag gesetzt. Sämtliche Nachrichten können selbst die letzte Quittierungsnachricht der erfolgreich übertragenen Datensegmente beinhalten. In diesem Fall würde der Endzeitpunkt direkt durch den Zeitpunkt dieser Nachrichten bestimmt.

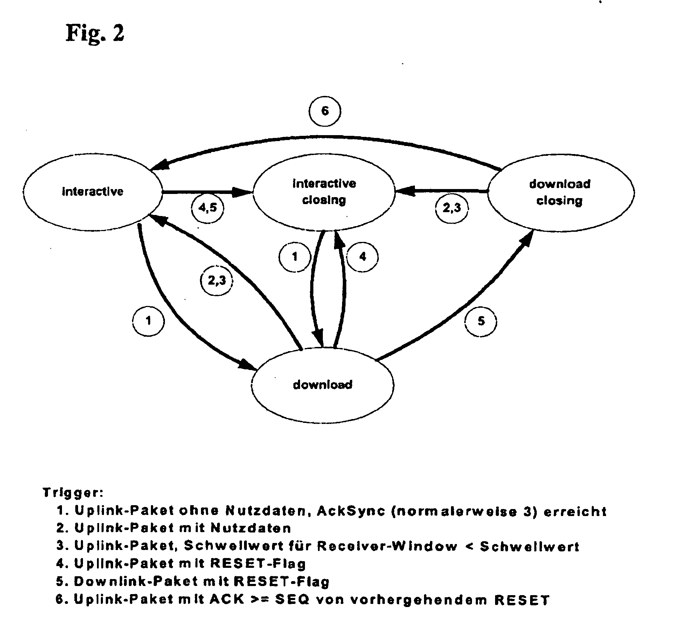

Auf TCP-Verbindungsebene gibt es vier Zustände: "download", "interactive", "download closing" und "interactive closing". Der Default-Zustand ist "interactive". Die Zustandsübergänge und ihre Trigger sind im Zustandsdiagramm der Figur 2 dargestellt.

Der Übergang vom Zustand "interactive" zum Zustand "download" symbolisiert den Beginn einer Downloadphase, d.h. den Begin des Zeitintervalls zur Durchsatzmessung. Dieser Übergang wird wie bereits oben beschrieben durch die Erkennung einer Quittierungsnachricht in Upstream-Richtung ausgelöst. Ferner kann im Zustand "interactive" der Zustandswechsel zum Zustand "interactive closing" durch die Erkennung einer Nachricht mit gesetzten Reset-Flag in Upstream und/oder Downstream-Richtung bewirkt werden. Der Übergang in die Downloadphase kann ebenfalls ausgehend vom Zustand "interactive closing" erfolgen.

Während des Zustands "download" wird die Anzahl der übertragenen Nutzdaten in Downstream-Richtung gezählt. Sobald eine Nachricht in Upstream-Richtung gesendet wird und diese Nutzdaten beinhaltet, wird ein Zustandswechsel zum Zustand "interactive" angeregt. Das gleiche gilt, falls der Schwellwert des Empfängerfensters unter einen definierten Schwellwert fällt und dies in einer entsprechenden Nachricht an den Server signalisiert wird.

Durch die Erkennung einer Nachricht mit gesetztem Reset-Flag wird entweder ein Zustandsübergang zum Zustand "interactive closing" oder zum Zustand "download closing" bewirkt. Der entsprechende Zielzustand wird in Abhängigkeit des den Reset auslösenden Teilnehmers gewählt.

Der Zustand "download closing" kann in den Zustand "interactive" übergehen, falls die vorausgehenden Resetnachricht nicht bestätigt wird. Dies ist im Einzelnen der Fall, falls das Ack-Feld der folgenden Upstream-Nachricht nicht mit der Sequenznummer der vorausgehenden Quittierungsnachricht übereinstimmt oder einen größeren Wert beinhaltet.

Ein Zustandswechsel von "download closing" zur "interactive closing" erfolgt analog zum Zustandswechsel zwischen "download" und "interactive".

Eine Client-Sitzung befindet sich in einer Downloadphase, solange sich mindestens eine TCP-Verbindung der betreffenden Client-Sitzung im Zustand "download" befindet. Während der Downloadphase einer Client-Sitzung werden die Bytes, also die Nutzdaten, aller Verbindungen gezählt. Dazu gehören ebenfalls die übermittelten Nutzdaten, die von UDP-Verbindungen oder von TCP-Verbindungen übermittelt werden, die nicht im Zustand "download" sind.

Das erfindungsgemäße Verfahren erlaubt eine präzise Bestimmung des Datendurchsatzes einer Client-Server-Verbindung in beliebiger Richtung. Das Verfahren unterscheidet zwischen "guten Ruhezeiten" und "schlechten Ruhezeiten", was insbesondere bei der Anwendung des Verfahrens auf Datenverbindungen, die eine stoßartige Datenübertragungscharakteristik aufweisen, vorteilhaft und effizient ist.

## Patentansprüche

1. Verfahren zur Bestimmung des Datendurchsatzes einer verbindungsorientierten Kommunikationsverbindung zwischen wenigstens einem Client und wenigstens einem Server über eine bidirektionale Übertragungsstrecke in einer ersten Übertragungsrichtung, wobei zur Durchsatzbestimmung der Verbindung die Anzahl der übertragenen Nutzdaten in erster Richtung innerhalb eines definierbaren Zeitintervalls bestimmt wird, und wobei das Zeitintervall durch einen festen oder dynamischen Startzeitpunkt und einen dynamischen Endzeitpunkt festgelegt wird,
**dadurch gekennzeichnet,**
**dass** die Übertragung von Nutzdaten in der zweiten Übertragungsrichtung den Endzeitpunkt des Zeitintervalls bestimmt.

2. Verfahren nach Anspruch 1, **dadurch gekennzeichnet, dass** der Startzeitpunkt durch die Übermittlung erster Nutzdaten in erster Richtung festgelegt wird.

3. Verfahren nach Anspruch 1, **dadurch gekennzeichnet, dass** der Startzeitpunkt durch die Quittierung erster Nutzdaten in erster Richtung festgelegt wird.

4. Verfahren nach Anspruch 3, **dadurch gekennzeichnet, dass** der Startzeitpunkt durch N Quittierungen erster Nutzdaten in erster Richtung festgelegt wird.

5. Verfahren nach einem der vorhergehenden Ansprüche, **dadurch gekennzeichnet, dass** die Nutzdaten in erster Richtung während des Zeitintervalls anhand der quittierten Nutzdaten in erster Richtung gezählt werden.

6. Verfahren nach einem der vorhergehenden Ansprüche, **dadurch gekennzeichnet, dass** alle der aufgebauten Verbindung des verbindungsorientierten Übertragungsprotokolls zuzuordnenden Nutzdaten und/oder ein Teil oder alle Nutzdaten weiterer Verbindungen oder ein Teil oder alle Nutzdaten in erster Richtung, die keiner Verbindungen zuzuordnenden sind, während des Zeitintervalls gezählt werden.

7. Verfahren nach einem der vorhergehenden Ansprüche, **dadurch gekennzeichnet, dass** der Endzeitpunkt des Zeitintervalls durch die Übertragung einer Signalisierungsnachricht in erster und/oder zweiter Richtung festgelegt wird, wobei die Signalisierungsnachricht vorzugsweise den Abbruch und/oder die Beendigung der Verbindung signalisiert.

8. Verfahren nach einem der vorhergehenden Ansprüche, **dadurch gekennzeichnet, dass** der Endzeitpunkt des Zeitintervalls durch ein Time-Out der Verbindung und/oder durch die Beendigung der Verbindung auf einer anderen Übertragungsschichtebene festegelegt wird.

9. Verfahren nach einem der vorhergehenden Ansprüche, **dadurch gekennzeichnet, dass** der tatsächliche Endzeitpunkt durch den Zeitpunkt der letzten Quittierung vor einem den Endzeitpunkt festlegenden Ereignisses bestimmt wird.

10. Vorrichtung zur Durchführung des Verfahrens nach einem der Ansprüche 1 bis 9.

11. Kommunikationssystem, insbesondere Telekommunikationssystem, mit wenigstens einem Client, insbesondere einem mobilen oder stationären Endgerät, und wenigstens einem Server, sowie mit einer Vorrichtung gemäß Anspruch 10.

12. Auf einem computerlesbaren Medium gespeicherter Programmcode zur Durchführung des Verfahrens gemäß einem der Ansprüche 1 bis 9 auf einer Vorrichtung gemäß Anspruch 11.

## Claims

1. Method to determine the data through-put of a connection-orientated communication link between at least one client and at least one server via a two-way transmission path in a first transmission direction, wherein for the determination of the through-put of the connection, the number of transferred pieces of user data in the first direction within a definable time interval is determined, and wherein the time interval is set by a fixed or dynamic start time and a dynamic end time,
**characterised in that**,
the transfer of pieces of user data in the second transfer direction determines the end time of the time interval.

2. Method according to claim 1, **characterised in that** the start time is set by the transmission of the first piece of user data in the first direction.

3. Method according to claim 1, **characterised in that** the start point is set by the acknowledgement of the first piece of user data in the first direction.

4. Method according to claim 3, **characterised in that** the start time is set by N acknowledgements of the first piece of user data in the first direction.

5. Method according to one of the preceding claims, **characterised in that** the pieces of user data are counted in the first direction during the time interval by means of the acknowledged pieces of user data in the first direction.

6. Method according to one of the preceding claims, **characterised in that** all pieces of user data allocated to the established connection of the connection-orientated transfer protocol and/or a part of or all pieces of user data of further connections or a part or all pieces of user data in the first direction, which are not allocated to a connection, are counted during the time interval.

7. Method according to one of the preceding claims, **characterised in that** the end time of the time interval is set by the transfer of a signalling message in the first and/or second direction, wherein the signalling message preferably signals the termination and/or the ending of the connection.

8. Method according to one of the preceding claims, **characterised in that** the end time of the time interval is set by a time out of the connection and/or by the ending of the connection on one other transfer layer.

9. Method according to one of the preceding claims, **characterised in that** the actual end time is determined by the point in time of the last acknowledgement before an event that sets the end time.

10. Device to implement the method according to one of claims 1 to 9.

11. Communication system, in particular telecommunication system, having at least one client, in particular a mobile or stationary terminal, and at least one server, as well as having a device according to claim 10.

12. Programme code stored on a medium that is able to be read by a computer to implement the method according to one of claims 1 to 9 on a device according to claim 11.

## Revendications

1. Procédé de détermination du débit de données d'une liaison de communication en mode connexion entre au moins un client et au moins un serveur via une liaison de transmission bidirectionnelle dans un premier sens de transmission, le nombre des données utiles transmises dans le premier sens pendant un intervalle de temps définissable étant déterminé pour la détermination du débit de la liaison, et l'intervalle de temps étant défini par un instant de départ fixe ou dynamique et un instant de fin dynamique,
**caractérisé en ce que**
la transmission de données utiles dans le second sens de transmission détermine l'instant de fin de l'intervalle de temps.

2. Procédé selon la revendication 1, **caractérisé en ce que** l'instant de départ est défini par la transmission de premières données utiles dans le premier sens.

3. Procédé selon la revendication 1, **caractérisé en ce que** l'instant de départ est défini par l'acquittement de premières données utiles dans le premier sens.

4. Procédé selon la revendication 3, **caractérisé en ce que** l'instant de départ est défini par N acquittements de premières données utiles dans le premier sens.

5. Procédé selon l'une des revendications précédentes, **caractérisé en ce que** les données utiles dans le premier sens sont comptées pendant l'intervalle de temps à l'aide des données utiles acquittées dans le premier sens.

6. Procédé selon l'une des revendications précédentes, **caractérisé en ce que** toutes les données utiles à affecter à la liaison établie du protocole de transmission en mode connexion et/ou une partie ou toutes les données utiles d'autres liaisons ou une partie ou toutes les données utiles dans le premier sens qui ne sont à affecter à aucune liaison, sont comptées pendant l'intervalle de temps.

7. Procédé selon l'une des revendications précédentes, **caractérisé en ce que** l'instant de fin de l'intervalle de temps est défini par la transmission d'un message de signalisation dans le premier et/ou le second sens, le message de signalisation signalisant de préférence l'interruption et/ou la fin de la liaison.

8. Procédé selon l'une des revendications précédentes, **caractérisé en ce que** l'instant de fin de l'intervalle de temps est défini par une expiration du temps de la liaison et/ou par la fin de la liaison sur un autre niveau de couche physique.

9. Procédé selon l'une des revendications précédentes, **caractérisé en ce que** l'instant de fin réel est déterminé par l'instant du dernier acquittement avant un événement définissant l'instant de fin.

10. Dispositif pour exécuter le procédé selon l'une des revendications 1 à 9.

11. Système de communication, en particulier système de télécommunication, comprenant au moins un client, en particulier un terminal mobile ou stationnaire, et au moins un serveur, ainsi qu'un dispositif selon la revendication 10.

12. Code de programme enregistré sur un support lisible par ordinateur pour l'exécution du procédé selon l'une des revendications 1 à 9 sur un dispositif selon la revendication 11.
